# EUROPEAN PATENT APPLICATION

(11) **EP 1 932 490 A1**
(43) Date of publication of application: **18.06.2008**
(21) Application number: 06798052.4
(22) Date of filing: 15.09.2006
(51) Int. Cl.: A61C 19/04

(54) **SURVEYOR DEVICE FOR DESIGNING DENTAL PROSTHESIS**

(30) Priority: 16.09.2005 JP 2005270254
(71) Applicant: Iba, Nobuyuki, Kyoto 611 (JP)
(72) Inventor: Iba, Nobuyuki, Kyoto 611 (JP)
(74) Representative: Gritschneder, Martin
(86) International application number: PCT/JP2006/318389
(87) International publication number: WO 2007/032484

(57) **Abstract**

To provide a dental surveyor apparatus that is especially used for processing comprehensively both clasp design and basal design of fabricating removable dentures, which is enable to place and remove easily and is secure after inserting.
The A dental surveyor apparatus for designing a denture, said dental surveyor apparatus comprising : a surveyor stand 2, a model receiving table 3 for setting a tooth form model M thereon, a model receiving table support means 4 for supporting said model receiving table 3 on said surveyor stand 2 after angular adjustment and setting, and a surveying line marking means 5 for marking a surveying line on said tooth form model on the model receiving table 3, said model receiving table support means 4 including, a V-axis rotating table 8 rotatable supported on a first rotating axis 6 extending vertically to said surveyor stand 2 and pivotally supporting a V-axis 7 extending parallel with said surveyor stand 2, an X-Y axis base table 10 rotatable supported on said V-axis 7 and having a second rotating axis 9 crossing perpendicularly to said V-axis 7, an X-Y axis rotating table 12 pivotally supported on said second rotating axis 9 and having an X-axis 11 crossing perpendicularly to said second rotating axis 9, a Y-axis base table 14 pivotally supported on said X-axis 11 and having a Y-axis 13 crossing perpendicularly to said X-axis 11, a model receiving table support plate 17 connected by a universal joint mechanism 16 extending radially from the shaft body 15 of said Y axis 13, and a plane displacement coupling means 18 between said model receiving table support plate 17 and said model receiving table 3.

## Description

### Background of the Invention

### Technical Field

This invention relates to a dental surveyor apparatus that is especially used for processing comprehensively both clasp design and basal design of fabricating removable dentures, which is enable to place and remove easily and is secure after inserting.

### Related Background Art

As is commonly known in the dental treatment, for example, the removable denture is often used for the patient in the case of loss of teeth in order to keep the mastication function and the esthetic restoration. The steps of creating the removable denture include the process of taking an impression of a patient's mouth cavity at first and then fabricating a dental plaster cast from it. The dental plaster cast can reproduce patients' gingival portion, wholesome teeth and gingival portion of lost teeth accurately. The removable dentures of patients' loss of teeth could be created on this dental plaster cast.

Usually, it is very important to design clasps that are key components of the removable dentures in designing the removable dentures with clasps, in order to create the removable dentures being secure after inserting. Generally, a very simple surveyor apparatus is used for designing clasps, which it is known as designing the path of insertion just in one direction. However, there are some cases in the clinic, which are the difference between the tilts of clasped tooth and tooth axis of the clasped tooth, and setting the directions of clasp design and basal design separately. In these cases, for example, the current dental surveyor apparatus for designing clasps is used, which was developed by the identical patent applicant and unveiled in the Patent Document 1 (JP 07-47089 A) and the Patent Document 2 (JP 09-289994 A).

The dental surveyor apparatus mentioned in Patent Document 1, is generally called a [X-axis - Y-axis - dental model (X - Y - M)] type apparatus (called a A-type dental surveyor apparatus that follow), which it could be used for scoring clasp outlines by turning the X-axis with an angle scale and Y-axis with an angle scale and tilting the dental plaster cast. And, the dental surveyor apparatus mentioned in Patent Document 2, is a B-type apparatus, which includes both B-1-type and B-2-type of the dental surveyor apparatus. The difference between the A-type and B-type of the dental surveyor apparatus is given the full particulars in the Patent Document 2. The B-type dental surveyor apparatus that the Z-axis mechanism is added to the (X - Y - M) type dental surveyor apparatus mentioned in Patent Document 1, which the Z-axis adjustment mechanism could be used for adjusting Z-axis to the action point M of the dental plaster cast, enables to design clasps aesthetically and in many directions

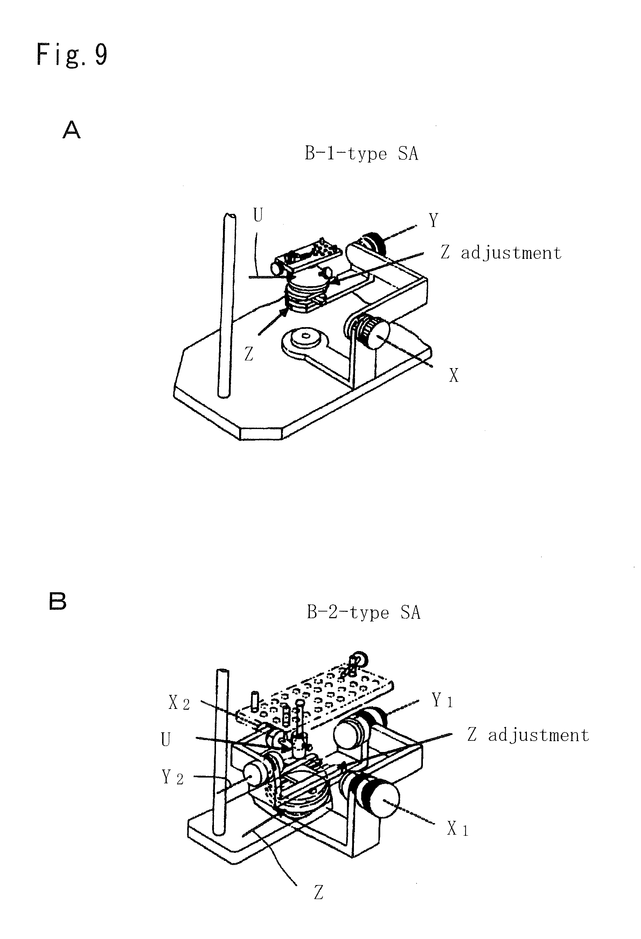

The A-type dental surveyor apparatus will make an error as an angle setting of the X-axis or Y-axis is in the tilt, because determining the path of insertion at first serves both as the X-axis and the Y-axis. Being adding the universal joint mechanism, shown generally in Fig. 9A, the B-1-type of the dental surveyor apparatus mentioned above is possible to be an angle setting in X-axis direction or Y-axis direction surely by determining the path of insertion at first. The B-1-type of the dental surveyor apparatus is composed of mechanisms, (X - Y - Z - Z-axis adjustment mechanism - U - M).

And furthermore, the B-type of the dental surveyor apparatus mentioned in Patent Document 2, is improved as the B-2-type of the dental surveyor apparatus, shown generally in Fig. 9B, which it is possible to design clasps by tilting the dental plaster cast in many directions instead of one direction used before, being adding the X-axis rotary mechanism, the Y-axis rotary mechanism and the universal joint mechanism U. The A-2-type of the dental surveyor apparatus is composed of mechanisms, (X1 - Y1 - Z - Z-axis adjustment mechanism - Y2 - X2 - U - M).

Patent Document 1: JP 07-47089 A (Abstract, Figure 1)
Patent Document 2: JP 09-289994 A (Abstract, Figure 1~Figure 5)

### Summary of the Invention

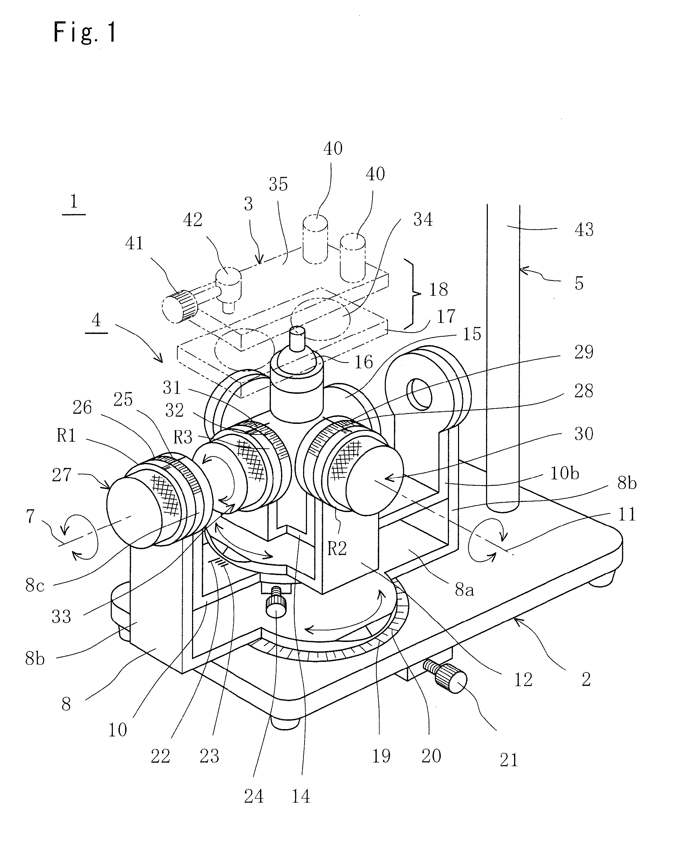

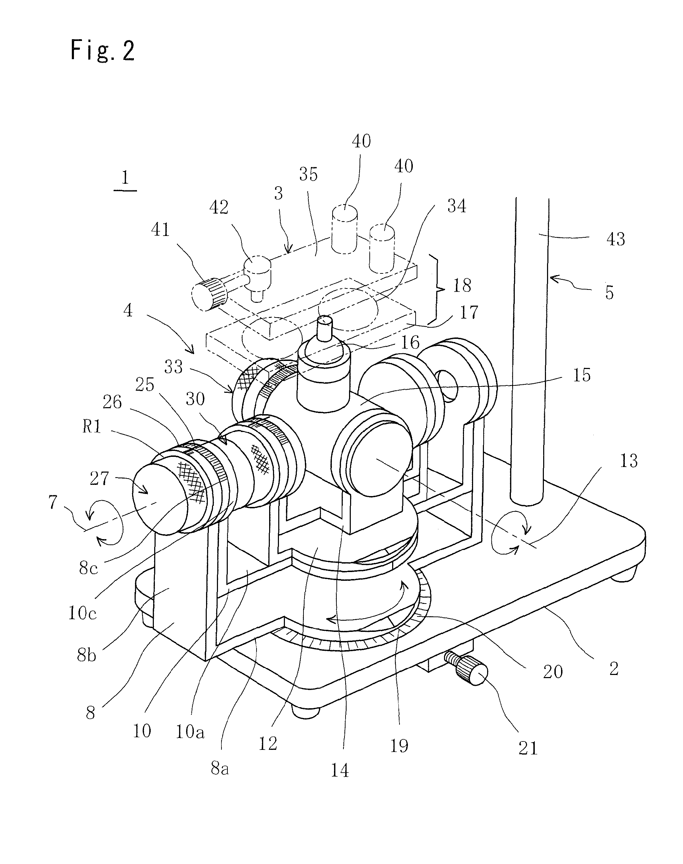

The new dental surveyor apparatus of this invention, shown generally in Fig. 1 and Fig. 2, solved the current technical problems mentioned above, especially it is composed of mechanisms, (Surveyor stand - first rotation axis - V(X,Y)-axis - second rotation axis - X-axis - Y-axis - Universal joint mechanism - Coupling device of plane displacement), comparing with the mechanisms of the B-2-type of the dental surveyor apparatus, (X1 - Y1 - Z - Z-axis adjustment mechanism - Y2 - X2 - U - M), indeed it is less action axes, but it has same functions. It is possible to be used for the way of clasp design and design in many directions mentioned above, so its structure is simplified and made it at relatively low cost which could be commercialized, and it also provides the way to score survey lines efficiently.

To achieve the object described above, the invention defined in claim 1 constitutes the dental surveyor apparatus for designing a denture, said dental surveyor apparatus comprising : a surveyor stand, a model receiving table for setting a tooth form model thereon, a model receiving table support means for supporting said model receiving table on said surveyor stand after angular adjustment and setting, and a surveying line marking means for marking a surveying line on said tooth form model on the model receiving table,
said model receiving table support means including, a V-axis rotating table rotatable supported on a first rotating axis extending vertically to said surveyor stand and pivotally supporting a V-axis extending parallel with said surveyor stand, an X-Y axis base table rotatable supported on said V-axis and having a second rotating axis crossing perpendicularly to said V-axis, an X-Y axis rotating table pivotally supported on said second rotating axis and having an X-axis crossing perpendicularly to said second rotating axis, a Y-axis base table pivotally supported on said X-axis and having a Y-axis crossing perpendicularly to said X-axis, a model receiving table support plate connected by a universal joint mechanism extending radially from the shaft body of said Y- axis, and a plane displacement coupling means between said model receiving table support plate and said model receiving table.

The invention defined in claim 2 is the dental surveyor apparatus according to claim 1, wherein a first locking means that could be used for locking said V-axis rotating table, which is mounted on and turned around said first rotating axis to said surveying stand, at a zero point position of it or a ±θ degree position of it, and a second locking means that could be used for locking said X-Y axis base table, which is mounted on and turned around the second rotating axis to said X-Y axis rotating table, at a zero point position of it or a ±θ degree position of it.

The invention defined in claim 3 is the dental surveyor apparatus according to claim 1 or claim 2, wherein a first angle-adjustment mechanism related to said V-axis that could be used for adjusting said X-Y axis base table, which is mounted on and turned around said V-axis rotating table, at a zero point position of it or a ±θ degree position of it, a second angle-adjustment mechanism related to said X-axis that could be used for adjusting said Y-axis base table, which is mounted on and turned around the X-axis mechanism to said X-Y axis rotating table, at a zero point position of it or a ±θ degree position of it, and a third angle-adjustment mechanism related to Y-axis that could be used for adjusting the Y-axis mechanism at a zero point position of it or a ±θ degree position of it to said Y-axis base table .

The invention defined in claim 4 is the dental surveyor apparatus according to any one of claims 1 to claim 3, wherein it is possible to set up the angle position between the position of said X-axis merged into said V-axis and the position of said Y-axis merged into said V-axis around said second rotating axis, as said first angle-adjustment mechanism related to V-axis is set at a zero point position of it.

### Brief Description of the Drawings

Figure 1 is a perspective view in outline of a dental surveyor apparatus of this invention, which is in the state of the Y-axis adjusted to the V(X, Y)-axis.
Figure 2 is a perspective view in outline of a dental surveyor apparatus of this invention, which is in the state of the X-axis adjusted to the V(X, Y)-axis.
Figure 3 is a top view in outline of a dental surveyor apparatus of this invention, which shows a definite example in a working state.
Figure 4 is a side view in outline of it observed from the arrow "a" in Figure 3.
Figure 5 is a front view in outline of it observed from the arrow "b" in Figure 3.
Figure 6A is a top view in outline of a surveying table located a dental model M.
Figure 6B is a top view in outline of a base plate of the surveying table connected with a coupling device of plane displacement.
Figure 6C is a side section view in outline of a coupling device of plane displacement, which it is possible to make a plane displacement between the surveying table and the base plate of it, and fix it.
Figure 7 is a side view in outline of a survey line scoring device of the dental surveyor apparatus of this invention.
Figure 8 shows the figures in outline of the dental model, which is used for demonstrating how to score survey line by operating the dental surveyor apparatus of this invention.
Figure 9 shows a perspective view in outline of the current dental surveyor apparatus, figure 9A is a perspective view in outline of the current dental surveyor apparatus, B-1-type, figure 9B is a perspective view in outline of the current dental surveyor apparatus, B-2-type.

### Legend

- 1:: dental surveyor apparatus
- M:: dental model
- Mo:: central action point of the clasp of the dental model
- 2:: surveyor stand
- 3:: model receiving table
- 4:: model receiving table support means
- 5:: survey line marking means
- 6:: first rotating shaft
- 7:: V-axis (for both of X-direction and Y-direction)
- 8:: V-axis rotating table
- 9:: second rotating shaft
- 10:: X-Y axis base table
- 11:: X-axis
- 12:: X-Y axis rotating table
- 13:: Y-axis
- 14:: Y-axis base table
- 15:: shaft body of the Y-axis
- 16:: universal joint mechanism
- 17:: model receiving table support plate
- 18:: plane displacement coupling means
- 19:: zero point position of the V-axis rotating table
- 20:: ±θ degree position of the V-axis rotating table
- 21:: first locking means
- 22:: zero point position of the X-Y axis rotating table
- 23:: ±θ degree position of the X-Y axis rotating table
- 24:: second locking means
- 25:: zero point position of V-axis
- 26:: ±θ degree position of V-axis
- 27:: first angle-adjustment mechanism related to V-axis
- 28:: zero point position of X-axis
- 29:: ±θ degree position of X-axis
- 30:: second angle-adjustment mechanism related to X-axis
- 31:: zero point position of Y-axis
- 32:: ±θ degree position of Y-axis
- 33:: third angle-adjustment mechanism related to Y-axis
- 34:: ball of the universal joint mechanism
- 35:: connecting pin of the universal joint mechanism
- 36:: magnetic coupling
- 37:: dental model setting plate
- 38:: dental model setting device
- 39:: holes
- 40:: couple of setting pins
- 41:: locking screw
- 42:: locking screw supporting part
- 43:: stay
- 44:: marker head
- 45:: marker operating mechanism
- 46:: connecting mechanism
- 47:: arm
- 48:: marker sheath
- 49:: marker
- 50:: magnetic marker holder
- 51:: upper part of the magnetic marker holder
- 52:: marker head

### Description of the Preferred Embodiments

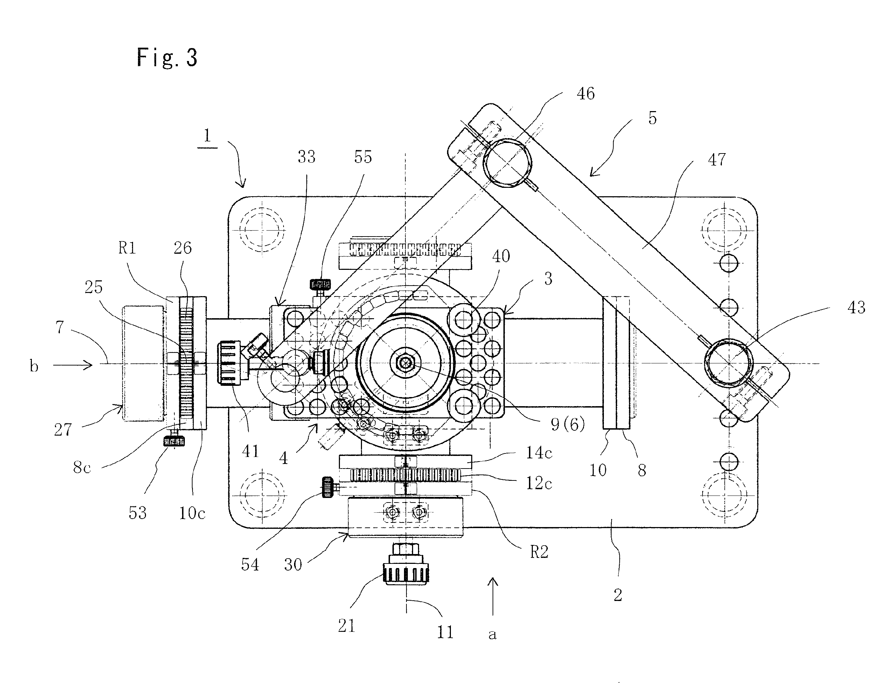

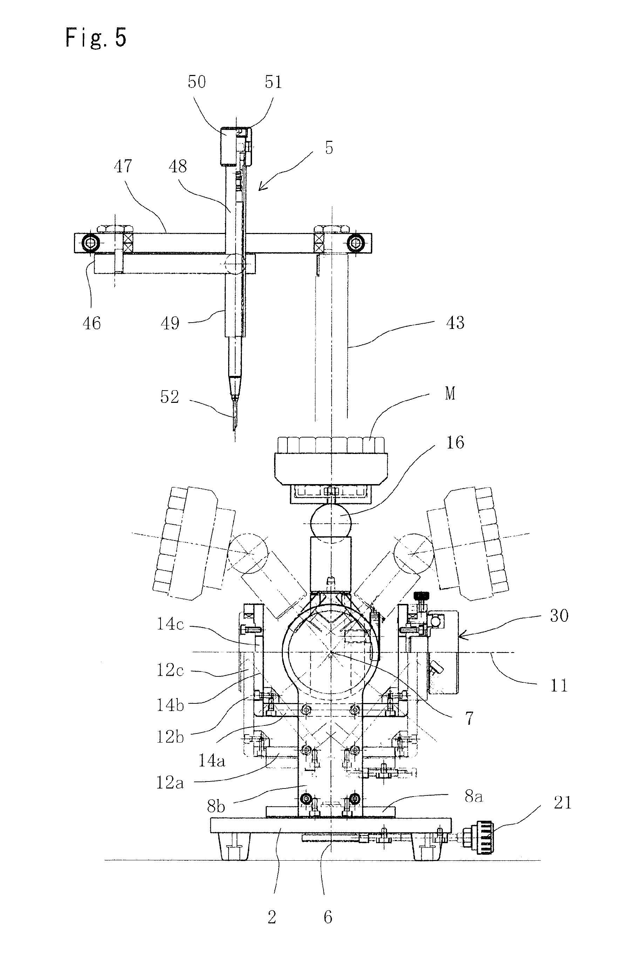

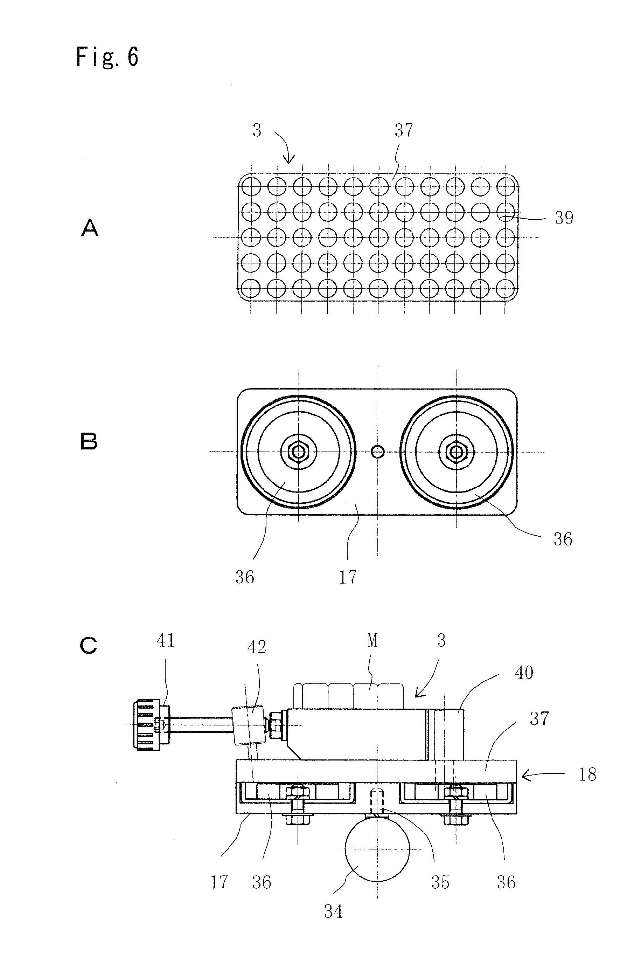

Following, the dental surveyor apparatus of this invention is explained in detail with Fig.1~Fig. 7 according to the definite example.

First of all, the dental surveyor apparatus 1 of this invention is explained in detail with Fig. 1~Fig. 7 according to the definite example. The dental surveyor apparatus 1 of this invention, shown in Fig. 1~Fig. 7, is composed of a surveyor stand 2, a model receiving table 3 used for locating a dental model (dental plaster cast) M, a model receiving table support means 4 which could be set at any desired angle position to the surveyor stand 2 on the model receiving table 3 connected with the surveyor stand 2, and a survey line marking means 5, which is used for marking survey line on the dental model M located on the model receiving table 3.

The model receiving table support means 4 that is the most key means on the apparatus of this invention, is mounted on and turned around the first rotating axis 6 being perpendicular to the surveyor stand 2, mounted on the V-axis rotating table 8 that its V-axis (for both X-direction and Y-direction) 7 is parallel to the surveyor stand 2 and turned around it, mounted on the X-Y axis base table 10 connected and turned around the second rotating axis 9 crossed the V-axis 7 at right angles, mounted on the X-Y axis rotating table 12 connected and turned around the X-axis 11 crossed the second rotating axis 9 at right angles, and is also composed of the prop supporting Y-axis mechanism 14 connected Y-axis 13 crossed the X-axis 11 at right angles, the model receiving table support plate 17 connected the universal joint mechanism 16 crossed the shaft body 15 of the Y-axis 13 at right angles, and the plane displacement coupling means 18 between the model receiving table support plate 17 and the model receiving table 3.

The model receiving table support means 4 is composed of the tightening screw of the first locking means 21 that could be used for locking the V-axis rotating table 8, which is mounted on and turned around the first rotating axis 6 to the surveying stand 2, at a zero point position of it 19 or a ±θ degree position of it 20, and the tightening screw of the second locking means 24 that could be used for locking the X-Y axis rotating table 12, which is mounted on and turned around the second rotating axis 9 to the X-Y axis base table 10, at a zero point position of it 22 or a ±θ degree position of it 23.

The model receiving table support means 4 is composed of the first angle-adjustment mechanism related to V-axis 27 that could be used for adjusting the X-Y axis base table 10, which is mounted on and turned around the V-axis mechanism 7 to the V-axis rotating table 8, at a zero point position of it 25 or a ±θ degree position of it 26, the second angle-adjustment mechanism related to X-axis 30 that could be used for adjusting the prop supporting Y-axis mechanism 14, which is mounted on and turned around the X-axis mechanism 11 to the X-Y axis rotating table 12, at a zero point position of it 28 or a ±θ degree position of it 29, and the third angle-adjustment mechanism related to Y-axis 33 that could be used for adjusting the Y-axis mechanism 15 of the Y-axis 13 at a zero point position of it 31 or a ±θ degree position of it 32 to the base table 14.

The model receiving table support means 4 is possible to set up the angle position between the position of the X-axis 11 merged into the V-axis 7 and the position of the Y-axis 13 merged into the V-axis 7 around the second rotating axis 9, as the first angle-adjustment mechanism related to V-axis 27 is set at a zero point position of it 25.

The V-axis rotating table 8 has the base 8a connected with the first rotating axis 6 and the parts 8b stood up on the both sides of the base 8a. The pair of bearings 8c with a dial on its outside is mounted on the upper sides of the base 8b turned around the V-axis 7, which the X-Y axis base table 10 could be adjusted and turned around the V-axis 7 at a zero degree position of it 25 or a ±θ degree position of it 26.

The X-Y axis base table 10 has the base 10a connected with the second rotating axis 9 and the parts 10b stood up on the both sides of the base 10a. The pair of bearings 10c with a start point dial on its outside is mounted on the upper sides of the base 10b turned around the V-axis 7. The ring with a dial named R1 in the figure is used for changing a start point, which is free on the V-axis 7 and could be locked by the screw 53. The bearings 8c of the V-axis rotating table 8 and the bearings 10c of the X-Y axis base table 10 could be released and locked immediately by operating the first angle-adjustment mechanism 27.

The X-Y axis rotating table 12 has the base 12a connected with the second rotary mechanism 9 and the parts 12b stood up on the both sides of the base 12a. The pair of bearings 12c with a dial on its outside is mounted on the upper sides of the base 12b turned around the X-axis 11, which the Y-axis base table 14 could be adjusted and turned around the X-axis 11 at a zero degree position of it 28 or a ±θ degree position of it 29.

The Y-axis base table 14 has the base 14a and the parts 14b1, 14b2 stood up on the both sides of the base 14a. The pair of bearings 14c with a start point dial on its outside is mounted on the upper side of the base 14b1 turned around the X-axis 11. The ring with a dial named R2 in the figure is used for changing a start point, which is free on the X-axis 11 and could be locked by the screw 54. The bearings 12c of the X-Y axis rotating table 12 and the bearings 14c of the Y-axis base table 14 could be released and locked immediately by operating the second angle-adjustment mechanism 30.

The pair of bearings 14c with a start point dial on its outside is mounted on the upper sides of the base 14b2 turned around the Y-axis 13. The ring with a dial named R3 in the figure is used for changing a start point, which is free on the Y-axis 13 and could be locked by the screw 55. The bearings 14c of the Y-axis base table 14 and the Y-axis mechanism 15 of the Y-axis 13 could be released and locked immediately by operating the third angle-adjustment mechanism 33.

The model receiving table support plate 17 is connected firmly with the pin 35 on the ball 34 of the universal joint mechanism 16. The magnetic couplings 36 are placed on the model receiving table support plate 17, which it keeps the surface of the plate in the plane. The model receiving table 3 is composed of the dental model setting plate 37, which it is magnetized metal material, and the dental model setting device 38, which could be used for locating the dental plaster cast M dexterously. The dental model setting device 38 is composed of a couple of setting pins 40, which can be placed at the intended holes 39 on the dental model setting plate 37, and the locking screw supporting part 42 with a locking screw 41.

The plane displacement coupling means 18 is composed of the model receiving table support plate 17 that is connected with the magnetic couplings 36, and the model receiving table 3 that is connected with the dental plaster cast setting plate 37, which it is magnetized metal material. The model receiving table support plate 17 and the model receiving table 3 are connected by the magnetic power on the position where the plane could be displaced at will. The plane displacement coupling means 18 is also composed of the means of the coupling locking device on the intended position, where the plane is displaced between the model receiving table support plate 17 and the model receiving table 3.

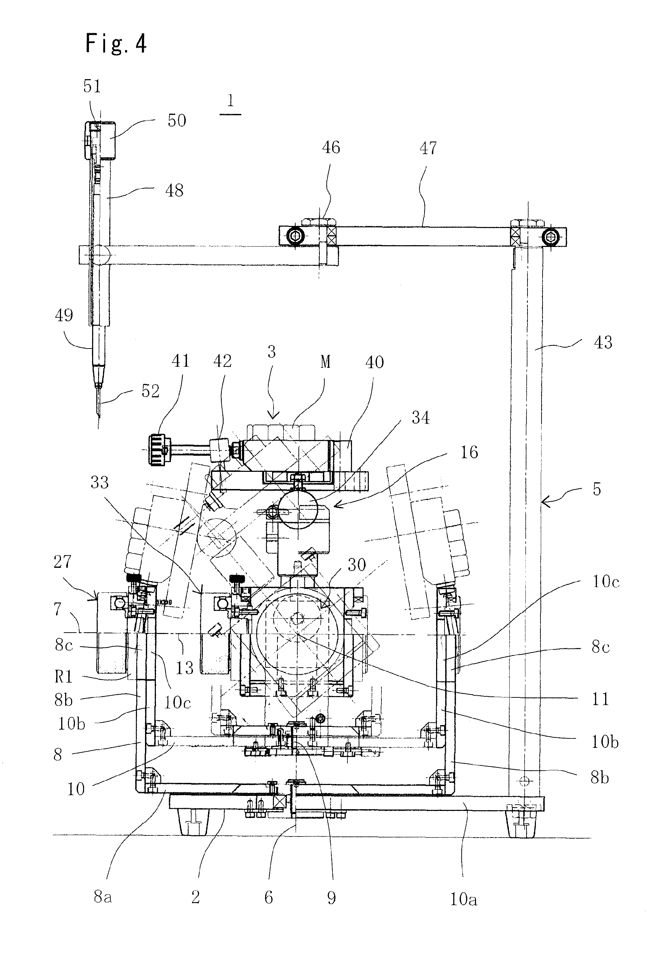

The survey line marking means 5 of this invention, shown in Fig. 4, is composed of the stay 43 stood up on the surveyor stand 2, and the arm 47 structured with the stay 43 and the connecting mechanism 46 turning freely. The survey line marking means 5, shown in Fig. 4, is also composed of the marker sheath 48 connected with the arm 47, and the marker 49 could slid up-down in it. The marker 49 is in the marker sheath 48 and held by the magnetic marker holder 50 that is in the marker sheath 48. The marker 49 could be controlled to make the marker head 52 appearances by operating the upper part of the magnetic marker holder 51.

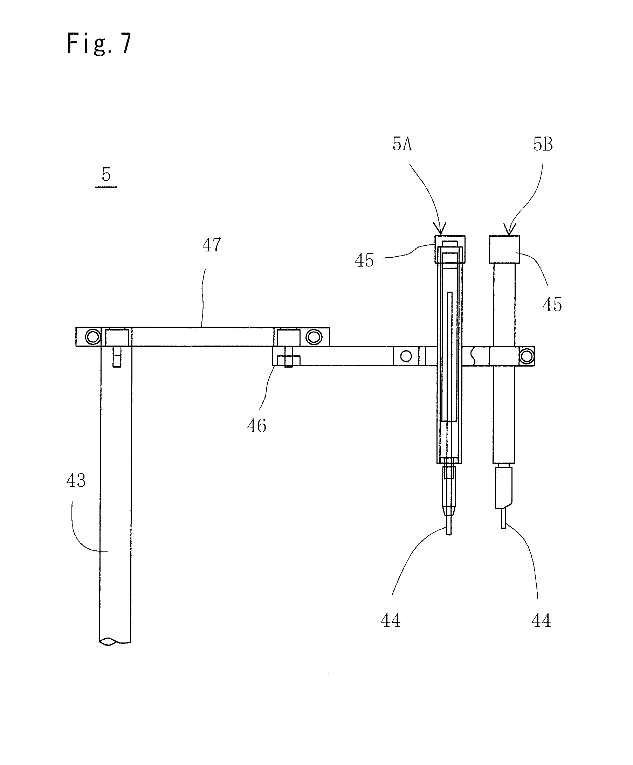

Furthermore, the survey line marking means 5, shown in Fig. 7, is composed of the stay 43 stood up on the surveyor stand 2. The survey line marking means 5, shown in Fig. 7, is also composed of two kinds of the survey line scoring device (5A and 5B), which it could be used whichever you like. The first survey line scoring device 5A is composed basically of the marker operating mechanism 45 that could be used for moving the marker head 44 in the X-axis direction or Y-axis direction separately and could be locked separately.

The survey line marking means 5A and 5B are composed of the arm 47 structured with the stay 43 and the connecting mechanism 46 turning freely.

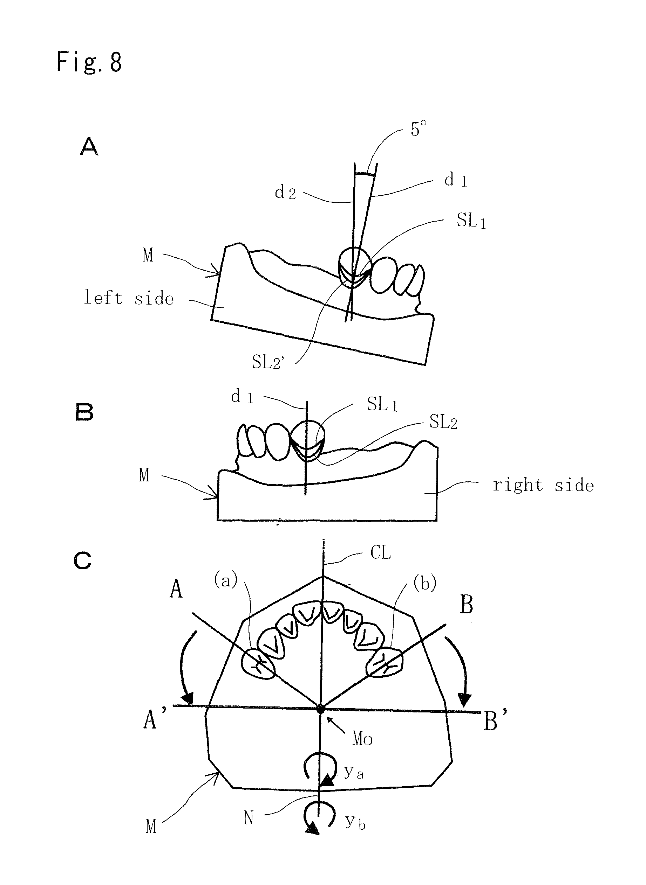

Following example is given, which is explained the procedure how to use the denture surveyor apparatus of this invention to score claps lines on the bilateral teeth [4] that are used for supporting the denture with the claps, shown in Fig. 8, in regard to the case that has teeth losses [5] [6] [7] on both sides.
(1). Locate and lock the dental model M on the model receiving table 3 that is fixed to the model receiving table support plate 17 by the magnetic power of the plane displacement coupling means 18, after verifying each angle position of the first rotary mechanism, the second rotary mechanism, V-axis, X-axis and Y-axis are in a zero angle position. It is necessary for setting the dental model M to parallel the centre line CL of the dental model M to the X-axis, as the occlusion surface of the dental model M is kept horizontal, and it is important to setting on the X-axis with regard to tilt angles of the apparatus to decrease the design errors. To locate the dental model M, first, set temporarily by sliding both the model receiving table support plate 17 and the model receiving table 3 on the plane to the desired position with the plane displacement coupling means 18, second, determine the direction of the path of insertion with the universal joint mechanism 16, third, correct the position gap of the displacement made at the second step with the plane displacement coupling means 18.
(2). Try to observe the bilateral teeth axes of the clasped teeth on the dental model M, the undercut area and the mucous membrane, determine the basic design direction d1 where the bilateral undercut are in good balance, shown in Fig. 8. The clasped tooth (a) of the right side [4] is desirable to the basic design direction d1 which is perpendicular to the occlusion surface, but the clasped tooth (b) of the left side [4] is desirable to the basic design direction d2 which has a five degrees mesial inclination, so design in many directions with the respective basic design direction.
(3). Adjust the central action point Mo of the clasps on the dental model M to the intersection point of X-axis and Y-axis by operating the coupling device of the plane displacement coupling means 18, shown in Fig. 8.
(4). X-axis and Y-axis are in a zero angle position.
(5). Score the survey line SL1 on the clasped teeth (a) and (b) in the design direction d1.
(6). Turn the Z-axis from the A direction of the clasp action to the A' direction crossed the N-axis at right angles for the purpose of scoring the outline clasp of the clasped tooth (a).
(7). Turn and tilt the N-axis to the arrow (ya) direction at the intended angle of fifteen degrees, which is used for scoring the clasp outline, and then score the surveyor line SL2 that is the clasp outline of the clasped tooth (a).
(8). Then, turn and tilt the X-axis to the arrow direction of five degrees, which is used for scoring the clasp outline of the clasped tooth (b), because the basic design direction is d2, and it is necessary to have a five degrees mesial tilt in advance.
(9). Turn the Z-axis from the B direction of the clasp action to the B' direction crossed the N-axis at right angles for the purpose of scoring the outline clasp of the clasp tooth (b).
(10). Turn and tilt the N-axis to the arrow (yb) direction at the intended angle of fifteen degrees, which is used for scoring the clasp outline, and then score the surveyor line SL2 that is the clasp outline of the clasped tooth (b).
   It is possible to design clasps in many directions, which the basic design direction of the bilateral clasped teeth is different, by the apparatus of this invention upon the procedure mentioned above.

### Industrial Applicability

The dental surveyor apparatus of this invention, is generally composed of mechanisms, [surveyor stand - first rotating axis - V(X-Y)-axis - second rotating axis - X-axis - Y-axis - universal joint mechanism - plane displacement coupling means - model M], which is very easy to be operated to design removable dentures by scoring survey line for dental clasp and base, and enable to create the dentures with high uniform quality, being the improvement of current ways that have some defects and problems.

The dental surveyor apparatus of this invention, which has a device supporting the model receiving table locating a dental model on it, connected with a surveyor stand, the first rotating axis, V(X-Y)-axis, the second rotating axis, X-axis, Y-axis, a universal joint mechanism and a plane displacement coupling means, and has special features that V(X-Y)-axis, X-axis and Y-axis could be locked separately in setting angle positions, is very useful and efficient to score survey line by adjusting and locking axes separately after locating a dental model M on a model receiving table.

## Claims

1. A dental surveyor apparatus for designing a denture, said dental surveyor apparatus comprising : a surveyor stand (2), a model receiving table (3) for setting a tooth form model (M) thereon, a model receiving table support means (4) for supporting said model receiving table (3) on said surveyor stand (2) after angular adjustment and setting, and a surveying line marking means (5) for marking a surveying line on said tooth form model on the model receiving table (3),
said model receiving table support means (4) including, a V-axis rotating table (8) rotatable supported on a first rotating axis (6) extending vertically to said surveyor stand (2) and pivotally supporting a V-axis (7) extending parallel with said surveyor stand (2), an X-Y axis base table (10) rotatable supported on said V-axis (7) and having a second rotating axis (9) crossing perpendicularly to said V-axis (7), an X-Y axis rotating table (12) pivotally supported on said second rotating axis (9) and having an X-axis (11) crossing perpendicularly to said second rotating axis (9), a Y-axis base table (14) pivotally supported on said X-axis (11) and having a Y-axis(13) crossing perpendicularly to said X-axis (11), a model receiving table support plate (17) connected by a universal joint mechanism (16) extending radially from the shaft body (15) of said Y axis (13), and a plane displacement coupling means (18) between said model receiving table support plate (17) and said model receiving table (3).

2. A dental surveyor apparatus according to claim 1, wherein a first locking means (21) that could be used for locking said V-axis rotating table (8), which is mounted on and turned around said first rotating axis (6) to said surveying stand (2), at a zero point position (19) of it or a ±θ degree position (20) of it, and a second locking means (24) that could be used for locking said X-Y axis base table (10), which is mounted on and turned around the second rotating axis (9) to said X-Y axis rotating table (12), at a zero point position (22) of it or a ±θ degree position (23) of it.

3. A dental surveyor apparatus according to claim 1 or claim 2, wherein a first angle-adjustment mechanism (27) related to said V-axis (7) that could be used for adjusting said X-Y axis base table (10), which is mounted on and turned around said V-axis rotating table (8), at a zero point position (25) of it or a ±θ degree position (26) of it, a second angle-adjustment mechanism (30) related to said X-axis (11) that could be used for adjusting said Y-axis base table (14), which is mounted on and turned around the X-axis mechanism to said X-Y axis rotating table (12), at a zero point position (28) of it or a ±θ degree position (29) of it, and a third angle-adjustment mechanism (33) related to Y-axis (13) that could be used for adjusting the Y-axis mechanism at a zero point position (31) of it or a ±θ degree position (32) of it to said Y-axis base table (14).

4. A dental surveyor apparatus according to any one of claim 1 to claim 3, wherein it is possible to set up the angle position between the position of said X-axis (11) merged into said V-axis (7) and the position of said Y-axis (13) merged into said V-axis (7) around said second rotating axis (9), as said first angle-adjustment mechanism (27) related to V-axis (7) is set at a zero point position (25) of it.
